# EUROPEAN PATENT SPECIFICATION

(11) **EP 2 409 478 B1**
(45) Date of publication and mention of the grant of the patent: **21.11.2018**
(21) Application number: 09748140.2
(22) Date of filing: 07.10.2009
(51) Int. Cl.: H04M 1/725

(54) **PERSONALIZED USER INTERFACE BASED ON PICTURE ANALYSIS**
PERSONALISIERTE BENUTZERSCHNITTSTELLE AUF BASIS VON BILDANALYSE
INTERFACE UTILISATEUR PERSONNALISÉE BASÉE SUR L'ANALYSE D'IMAGE

(30) Priority: 16.03.2009 US 160359 P
(43) Date of publication of application: 25.01.2012
(73) Proprietor: Sony Mobile Communications Inc., Shinagawa-ku Tokyo 140-0002 (JP)
(72) Inventor: AGEVIK, Markus, SE-212 30 Malmo (SE); MORTIN, Andreas, SE-212-30 Malmo (SE)
(74) Representative: Aera A/S
(86) International application number: PCT/IB2009/007064
(87) International publication number: WO 2010/106394

(56) References cited:
- EP-A- 1 775 712
- WO-A-2007/029976

## Description

### TECHNICAL FIELD OF THE INVENTION

The technology of the present disclosure relates generally to apparatus and methods for personalizing the user interface of a portable electronic device, and, more particularly, for personalizing a user interface by selecting one or more photographic images to create a theme.

### BACKGROUND

Portable electronic devices, such as, for example, mobile wireless electronic devices, e.g., mobile telephones (referred to below as mobile phones), portable digital assistants (PDAs), etc., are increasing in popularity. For example, mobile phones, PDAs, portable computers, portable media players and portable gaming devices are in widespread use. Features associated with some types of portable electronic devices have become increasingly diverse. To name a few examples, many electronic devices have cameras, text messaging, Internet browsing, electronic mail, video and/or audio playback, and image display capabilities. Many have hands free interfaces with capabilities for connecting to external speakers and microphones as well as wired and wireless communication capabilities, such as, for example, short distance communication capability, e.g., Bluetooth communication functions, and the like.

Portable electronic devices, e.g., mobile phones, PDAs, media players, etc., also have the capability to output content, e.g., to show content such as pictures, movies, lists, menus, such as those represented by a graphical user interface (GUI), etc. on a display; to play the content such as sound, e.g., music or other sounds, via one or more speakers, such as, for example, an internal speaker of the device or external speakers connected by wire or wirelessly to an output of the device, etc. Various wired and wireless coupling techniques have been used and may be used in the future, such as, for example, Bluetooth communication functions, or other coupling techniques.

Distinguishing the appearance of portable electronic devices has become an important need for many users. Often, users desire a distinguished appearance to meet their personal tastes and preferences, and to express themselves. The set of visual elements that provide a unified look to the display of a portable electronic device display is typically called a "theme". The theme may also define sounds associated with events, such as ringtones, click tones, message alerts and the opening and closing of applications.

EP 1775 712 A1 discloses an automatic theme creator having an input unit for selecting and/or activating the theme creator, a control unit arranged to control said theme creator, and arranged to receive image data transmitted by the camera, when the theme creator has been selected and/or activated, wherein the colour of a theme is changed depending on the colour of an image captured by the camera.

The electronic device may be provided with a number of preset themes by the manufacturer from which the user may choose to personalize his or her user interface. Alternatively, the user may access a "theme-editor" via the Internet or through an application by means of which the user can edit a theme or create a theme based on a photograph.

### SUMMARY

Existing methods of personalizing a user interface typically require the user to carry out several steps to create and implement an acceptable theme, which takes more time and effort than many users want to expend. A quick and easy, "one-click" method of creating a unique user interface is desirable.

To provide a personalized user interface, the present disclosure describes a method by which a user can quickly create a theme for the user interface based on one or more images selected by the user. The selected images are analyzed in accordance with a predetermined set of criteria to create a map of the prominent image attributes. A theme for the user interface is created from the image attribute map and then applied to the user interface.

According to one aspect of the disclosure, a method provides a way to control a plurality of user interface elements of a portable electronic device. The method may include analyzing image data from one or more user-selected images to determine one or more image attributes; processing the image attributes to generate a theme; and controlling the plurality of user interface elements based on the theme, wherein analyzing the image data includes employing subject matter determination logic, wherein the subject matter determination logic includes at least one of an image recognition logic, an object recognition logic and a face recognition logic configured to determine the image attributes.

According to one embodiment of the method, the plurality of user interface elements includes icons and the analyzing includes determining the amount or direction of lines in the image data, and the theme includes icon arrangement in accordance with the lines.

According to one embodiment of the method, the analyzing, processing and controlling are carried out in response to user selection of a dedicated theme key or menu option.

According to one embodiment of the method, the image attributes include at least one of color, amount or direction of lines, subject matter, identity of person, image characteristics and location.

According to one embodiment of the method, each attribute has a score or value that is assembled into an image attribute map.

According to one embodiment of the method, the method further includes transferring the theme to another electronic device for use by the other electronic device to control user interface elements of the other electronic device.

According to one embodiment of the method, the theme includes at least one of wallpaper image, icon arrangement, icon size, icon shape, text color, menu color, window border color, on-screen button color, on-screen button arrangement, animation effects and emitted light color.

According to one embodiment of the method, the theme includes at least one of ringtone, message alert sound, and button click sound.

According to one embodiment of the method, the electronic device includes a camera assembly.

According to one embodiment of the method, the user selected image is received from the camera assembly.

According to one embodiment of the method, the user selected image is received from an image database.

According to one embodiment of the method, the user selected image is a video. According to another aspect of the disclosure, an electronic device as defined in independent claim 13.

According to one embodiment of the device, the device further includes a camera assembly.

These and further aspects and features will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the scope of the claims appended hereto.

Features that are described and/or illustrated with respect to one embodiment may be used in the same way or in a similar way in one or more other embodiments and/or in combination with or instead of the features of the other embodiments.

### BRIEF DESCRIPTION OF THE DRAWINGS

FIGs. 1 and 2 are respectively a front view and a rear view of an exemplary electronic device;
FIG. 3 is a schematic block diagram of the exemplary electronic device of FIGs. 1 and 2;
FIG. 4 is a schematic diagram of a communications system in which the electronic device may operate;
FIG. 5 is a flow diagram of steps carried out by the electronic device to implement a method of personalizing the user interface based on at least one photograph;
FIG. 6 is a flow diagram of steps carried out by the electronic device to update or revise an existing theme of the user interface;
FIG. 7 is a representative photographic image of a landscape used to generate the theme.
FIG. 8 is a representative alternative photographic image of a seascape used to generate the theme.
FIG. 9 is a representative photographic image used to generate the theme.
FIG. 10 is representative photographic image of objects and people used to generate the theme.

### DETAILED DESCRIPTION OF EMBODIMENTS

Embodiments will now be described with reference to the drawings, wherein like reference numerals are used to refer to like elements throughout. It will be understood that the figures are not necessarily to scale.

In the present document, embodiments are described primarily in the context of a mobile wireless electronic device in the form of a portable radio communications device, such as the illustrated mobile phone. It will be appreciated, however, that the exemplary context of a mobile phone is not the only operational environment in which aspects of the disclosed systems and methods may be used. Therefore, the techniques, methods and structures described in this document may be applied to any type of appropriate electronic device, examples of which include a mobile phone, a mobile wireless electronic device, a media player, a gaming device, a computer, e.g., a laptop computer or other computer, an ultra-mobile PC personal computers, a GPS (global positioning system) device, a pager, a communicator, an electronic organizer, a personal digital assistant (PDA), a smartphone, a portable communication apparatus, etc., and also to an accessory device that may be coupled to, attached, to, used with, etc., any of the mentioned electronic devices or the like.

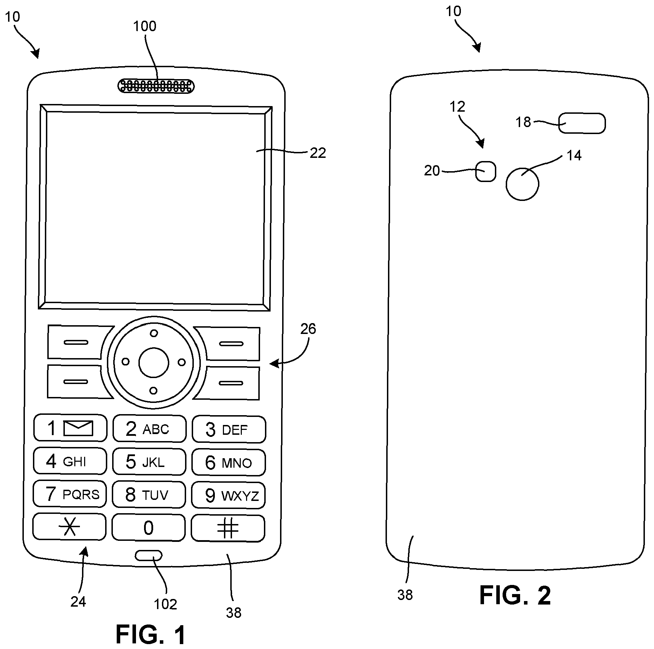

Referring initially to FIGs. 1 through 3, an electronic device 10 is shown. The illustrated electronic device 10 is a mobile telephone. The electronic device 10 includes a camera assembly 12 for taking digital still pictures and/or digital video clips. As will be appreciated, the location of the camera on the mobile telephone may be dependent on the type of camera (e.g., a video phone camera may be on the front side of the phone, while a snapshot camera may be on the backside of the phone). Image and/or video files may be stored in the memory 90. It is emphasized that the electronic device 10 need not be a mobile telephone. In addition, the electronic device 10 need not include camera assembly 12.

The camera assembly 12 may be arranged as a typical camera assembly that includes imaging optics 14 to focus light from a scene within the field-of-view of the camera assembly 12 onto a sensor 16. The sensor 16 converts the incident light into image data. The imaging optics 14 may include various optical components, such as a lens assembly and components that supplement the lens assembly (e.g., a protective window, a filter, a prism, and/or a mirror). The imaging optics 14 may be associated with focusing mechanics, focusing control electronics (e.g., a multi-zone autofocus assembly), optical zooming mechanics, etc. Other camera assembly 12 components may include a flash 18 to provide supplemental light during the capture of image data for a photograph, a light meter 20, a display 22 for functioning as an electronic viewfinder and as part of an interactive user interface, a keypad 24 and/or buttons 26 for accepting user inputs, an optical viewfinder (not shown), and any other components commonly associated with cameras. One of the keys from the keypad 24 or one of the buttons 26 may be a shutter key that the user may depress to command the taking of a photograph.

Another component of the camera assembly 12 may be an electronic controller 28 that controls operation of the camera assembly 12. The controller 28 may be embodied, for example, as a processor that executes logical instructions that are stored by an associated memory, as firmware, as an arrangement of dedicated circuit components, or as a combination of these embodiments. Thus, methods of operating the camera assembly 12 may be physically embodied as executable code (e.g., software) that is stored on a computer readable medium or may be physically embodied as part of an electrical circuit. In another embodiment, the functions of the electronic controller 28 may be carried out by a control circuit 30 that is responsible for overall operation of the electronic device 10. In this case, the controller 28 may be omitted. In another embodiment, camera assembly 12 control functions may be distributed between the controller 28 and the control circuit 30.

It will be understood that the sensor 16 may capture data at a predetermined frame rate to generate a preview video signal that is supplied to the display 22 for operation as an electronic viewfinder. Typically, the display 22 is on an opposite side of the electronic device 10 from the imaging optics 14. In this manner, a user may point the camera assembly 12 in a desired direction and view a representation of the field-of-view of the camera assembly 12 on the display 22.

The electronic device 10 may include a position data receiver 32, such as a global positioning system (GPS) receiver, Galileo satellite system receiver or the like. The position data receiver 32 may be involved in determining the location of the electronic device 10. The location data received by the position data receiver 32 may be processed to derive a location value, such as coordinates expressed using a standard reference system (e.g., the world geodetic system or WGS). Also, assisted-GPS (or A-GPS) may be used to determine the location of the electronic device 10. A-GPS uses an assistance server, which may be implemented with a server of a communications network in which the electronic device 10 operates. The assistance server processes location related data and accesses a reference network to speed location determination and transfer processing tasks from the electronic device 10 to the server. For instance, the assistance server may perform tasks to make range measurements and calculate position solutions that would otherwise be carried out by the position data receiver or elsewhere in the electronic device 10. Location may be determined in other manners. For instance, under global system mobile communications (GSM) and universal mobile telecommunications system (UMTS) protocols, the position could be estimated through a mobile originated location request (MO-LR) to the network so that the electronic device 10 position could be estimated using the network's knowledge of base station locations and antenna directions.

The electronic device 10 may further include a user interface personalization function 38 configured to generate a theme for the user interface (UI). Additional details and operation of the UI personalization function 38 will be described in greater detail below. The UI personalization function 38 may be embodied as executable code that is resident in and executed by the electronic device 10. In one embodiment, the UI personalization function 38 may be a program stored on a computer or machine readable medium. The UI personalization function 38 may be a stand-alone software application or form a part of a software application that carries out additional tasks related to the electronic device 10.

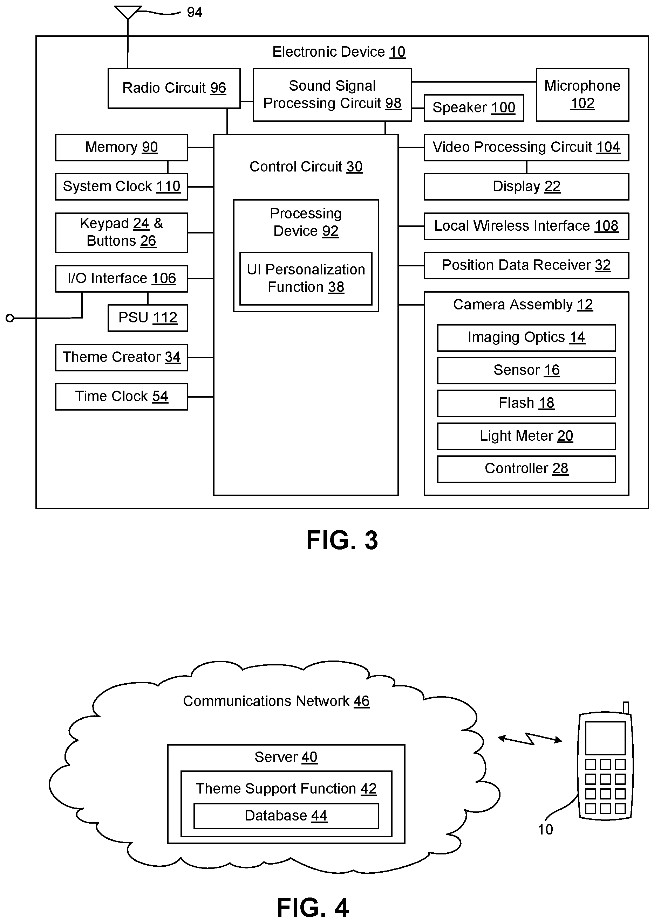

With additional reference to FIG. 4, the UI personalization function 38 may use the generated theme to obtain one or more UI effects such as, for example, background or wallpaper images, icon arrangements, icon size, icon shape, text color, menu color, window border color, on-screen button color, on-screen button arrangement, animation effects, emitted light color, ringtones and click tones from a coordinating theme support function 42 that is hosted by a server 40. As described in greater detail below, the theme support function 42 may include an image database 44, a ringtone database, a click tone database, etc.

The server 40 may be part of a communication network 46 in which the electronic device 10 is configured to operate. For instance, the server 40 may manage calls placed by and destined to the electronic device 10, transmit data to the electronic device 10 and carry out other support functions. In other embodiments, the server 40 may be outside the domain of the communications network 46. The communications network may include communications towers, access points, base stations or any other transmission medium for supporting wireless communications between the communications network 46 and the electronic device 10. The network 46 may support the communications activity of multiple electronic devices 10 and other types of end user devices. As will be appreciated, the server may be configured as a typical computer system used to carry out server functions and may include a processor configured to execute software containing logical instructions that embody the functions of the theme support function 42 and a memory to store such software.

Additional details and operation of the theme support function 42 will be described in greater detail below. The theme support function 42 may be embodied as executable code that is resident in and executed by the server 40. In one embodiment, the theme support function 42 may be a program stored on a computer or machine readable medium. The theme support function 42 may be a stand-alone software application or form a part of a software application that carries out additional tasks related to the server 40.

It will be apparent to a person having ordinary skill in the art of computer programming, and specifically in application programming for mobile telephones or other electronic devices, how to program the electronic device 10 to operate and carry out logical functions associated with the theme function 38 and how to program the server 40 to operate and carry out logical functions associated with the theme support function 42. Accordingly, details as to specific programming code have been left out for the sake of brevity. Also, while the functions 38 and 42 may be executed by respective processing devices in accordance with an embodiment, such functionality could also be carried out via dedicated hardware or firmware, or some combination of hardware, firmware and/or software.

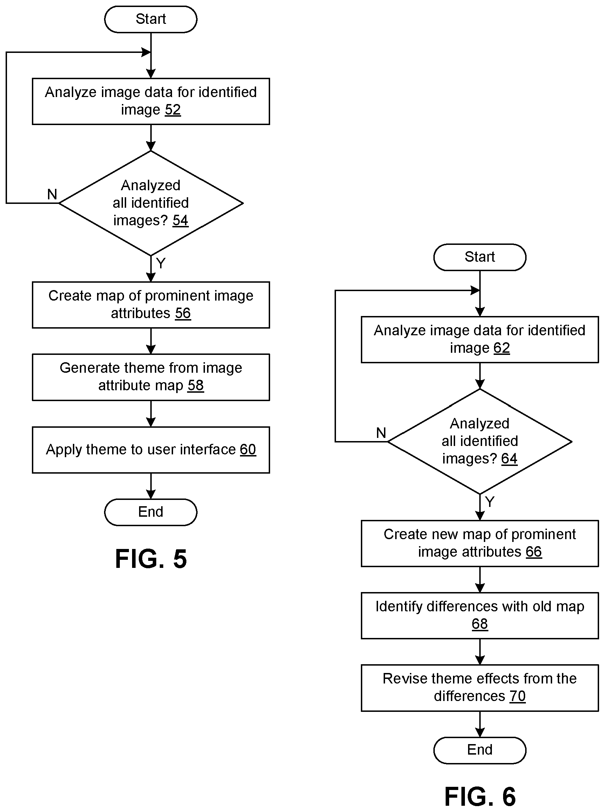

The logical operations represented by FIGs. 5 and 6 will be described to demonstrate a logical flow in accordance with an exemplary sequence of carrying out logical operations for personalizing a user interface. It will be appreciated that alternative logical flows are possible. Therefore, even though FIGs. 5 and 6 show a specific order of executing functional logic blocks, the order of executing the blocks may be changed relative to the order shown. Also, two or more blocks shown in succession may be executed concurrently or with partial concurrence. Certain blocks and/or certain portions may be omitted.

The logical flow for the user interface personalization function 38 may begin in block 52 where the images identified by the user are analyzed. In one embodiment, the user identifies one or more photographic images on which to base the theme. The image may be selected from one or more snapshots and/or videos. The images may be selected from those stored in the memory 90 or captured by camera assembly 12. One or more of the images may be downloaded from the Internet or from a remote database using the local wireless interface 108. The images may be chosen from photographs, paintings, album covers, art work, designs, videos, etc. The user may manually select the images, or the images may be automatically selected by the processing device 92.

The image data for each identified photographs is analyzed in block 52. The image data may include the subject matter of the image; facial features of a person or persons; colors; landscape characteristics including sky, horizon, trees, water, etc.; cityscape information including buildings, historical sites, landmarks, etc.; and image characteristics such as contrast, glossiness, clarity, focus point, orientation and depth of field. The image data may also include location identifiers such as GPS coordinates and/or altitude data; date and time information; and information relating to climate and/or weather. Additionally, the image data may include geometric data, including the appearance of lines, squares, rectangles, circles, triangles, etc. within the image. This listing of data extractable from the photograph or associated metadata is not intended to be exhaustive, but to illustrate examples of information determinable from the image analysis. The image analysis may employ subject matter determination logic that includes one or more image recognition algorithms and/or object recognition algorithms. A face recognition algorithm that identifies the presence of facial characteristics or the identity of specific individuals may also be used. A landscape recognition algorithm that identifies the presence of a landscape may be used. A color and/or pattern recognition algorithm may also be used in the image analysis.

The logical flow may proceed to block 54 where it is determined whether all of the identified images have been analyzed. If it is determined that all of the identified images have not been analyzed, the logical flow returns to block 52. If it is determined that all of the images have been analyzed, a positive determination is made and the logical flow may proceed to block 56.

In block 56, the cumulative image data extracted from the image analysis step is used to create a map of prominent image attributes. The image data may be categorized according to predefined criteria or rules, and assigned a value from which the image attributes are determined. The image attributes include any information derivable from the image, including, but not limited to, for example, color, amount or direction of lines, subject matter, identity of a person or persons, image characteristics and location. For example, if the image data analysis results in the identification of several family members, one of the image attributes may be family. As a further example, if the image data analysis results in the object identification of trees, sky and water, and the colors green and blue, one of the image attributes may be forest. In another example, if the image data analysis results in the object identification of tall buildings and cars, and the color identification of gray, one of the image attributes may be city. The prominent image attributes, which may be those more heavily weighted or those occurring most frequently from the analysis of all of the images, are mapped.

The logical flow may proceed to block 56 where the image attribute map is used to generate a theme. In one embodiment, the electronic device 10 includes a theme creator 34. In another embodiment, a remote theme support function 42 is accessed by the electronic device 10 via communications network 46. The generated theme includes a collection of related graphical images, color palettes, sounds and other elements. As an example, an image attribute map has forest and family as prominent attributes. The theme generated from the attribute map may include green tones and a "family-friendly" ringtone.

In block 60, the theme generated in block 56 is applied to the user interface. The elements of the user interface to which the theme may be applied include, for example, the background image, the menu display, the shape and size of the icons as well as the placement of the icons, ringtones, click tones, the color of the display, the emitted light color, font style, font size and font weight, animation effects, etc. The theme may be saved in memory 90, may be downloaded to other devices for use by those devices and/or sent to another user. In one embodiment, the theme is transferred to and applied to a user interface of an accessory, such as a digital photo frame or a car kit. The theme may be transferred and applied to any device having a graphical user interface (GUI). Non-limiting examples of such devices include computers, photo screens, televisions, onboard car screens, projectors, game players, external monitors and TiVo boxes. The opportunities for theme spreading are unlimited.

In one embodiment, the theme generated by the selected images may be used to locate other images from the Internet that are compatible with the theme to be used as the background. In one embodiment, the image data of the identified images may include GPS coordinates, which may be used to locate additional images from the same location. Alternatively, the location attributes may be used to regionalize the theme or to tailor the theme to user demographics.

With additional reference to FIG. 6, the theme generated by the originally selected images may be updated or revised based on a newly selected image or images. The identified image is analyzed in block 62. The newly identified image may be chosen from stored images or may be an image captured by the camera assembly 12. The identified image may also be downloaded from the Internet or from a remote database using the local wireless interface 108. The logical flow may proceed to block 64 where it is determined whether all of the identified images have been analyzed. If it is determined that all of the identified images have not been analyzed, the logical flow returns to block 62. If it is determined that all of the images have been analyzed, a positive determination is made and the logical flow may proceed to block 66.

In block 66, a new map of prominent image attributes is created from the image data obtained from the identified images, which may include one or more images used in the establishment of the current theme and/or one or more newly selected images. In block 68, the new map is compared to the old map of prominent features that was generated in block 58 to identify differences. The logical flow may proceed to block 70 where the theme effects are revised based on the identified differences. The theme effects may include related graphical images, color palettes, sounds and other elements. For example, the image attribute map may include less forest, so that the theme includes less green in the color palette. The theme may be repeatedly updated using additional images. The existing theme may also be replaced with an entirely new theme based on a new set of selected images.

The user may create a theme or revise an existing theme in a "one-click operation". For example, one of the keys of the keypad 24 or one of the buttons 26 may be a theme key that the user may depress to command the personalization of the user interface once the images have been selected. As an example, a user may take a picture with camera 12 and immediately press the theme key. The new theme instantly appears on the user interface.

In addition to personalizing the visual elements of the user interface, the method may include personalization of the sound elements of the user interface. In one embodiment, a suitable ringtone may be located based on the generated theme. For example, if the theme is generated based on one or more photographs of skyscrapers, the user interface may include a ringtone having a high, clear ringtone. If the theme is generated based on one or more photographs of a forest or a nature scene, the user interface may include a soft, smooth ringtone. Suitable ringtones may be located using existing technologies such as TrackID™. Audio content may be derived from image processing and analysis using, for example, digital geometry.

The layout of the icons or menu of the user interface may be determined based on the theme. For example, if a selected image contains many details, the image analysis and theme generator may indicate that the user would like to display as many icons as possible. A selected image having very little detail may result in a minimalistic theme wherein few icons or menu items are displayed.

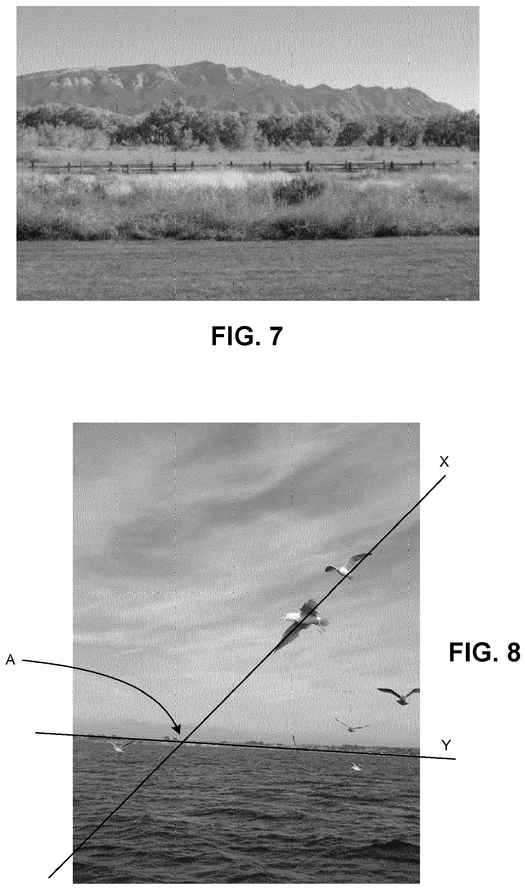

Referring to FIGs. 7-10, representative images are shown. In a first example, the image of FIG. 7 is selected by the user from the user's photo album. The user initiates the user interface personalization function 38 by pressing one of the buttons 26 or by selecting a menu icon from the display 22. The image data may be analyzed using a landscape recognition algorithm, color recognition algorithm and/or pattern recognition algorithm. The GPS coordinates may also be analyzed. A theme may be created and applied to the user interface elements to, for example, position the icons in a stacked, linear layout, display the text menu colors as the prominent colors green and blue, and display as the background or wallpaper an image from the same GPS coordinates. GPS coordinates may be used to identify the location of the image as a Native American reservation in central New Mexico. The ringtone may be selected from music originating from that geographic region. As will be understood, other graphical user interface (GUI) features (e.g., touch screen, button layout and/or style, icon color, icon selection, skins, etc.) and other sounds (e.g., message alert sounds, click sounds, etc.) may be established as part of the theme generation.

FIG. 8 represents an alternative image selected by the user for personalizing the user interface. The image may have been captured by camera 12 of electronic device 10. The image data analysis may identify the subject matter as seagulls and a seascape and the primary color as blue. The image analysis may further identify line X and Y that intersect at point A. A theme may be created and applied to the user interface elements to position the icons near the lower portion of the display or in an arrangement in accordance with lines X and Y. The theme may further include various shades of blue used as the menu colors and other nautical elements.

If the images of FIG. 7 and FIG. 8 are both selected by the user for personalizing the user interface, a nature inspired theme may be created based on the common colors of the images and the horizontal lines of the images.

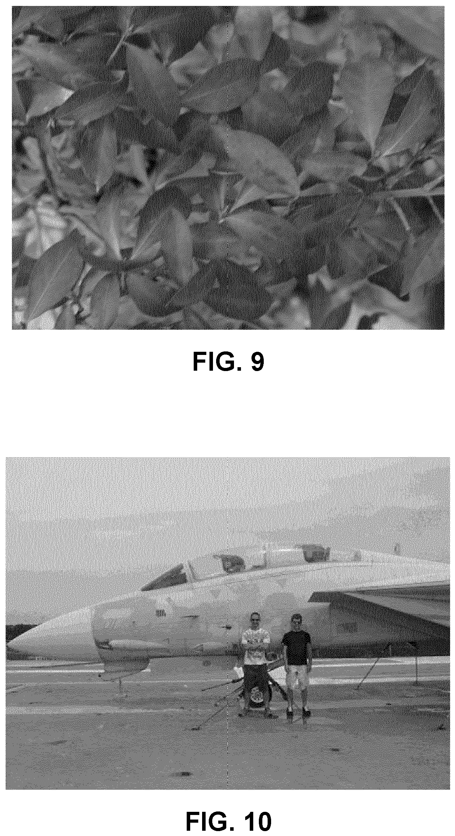

FIG. 9 represents a further alternative image selected by the user for personalizing the user interface. A theme may be created and applied to the user interface elements to include, for example, the color red and a relatively random, less geometric layout for the menu icons.

FIG. 10 represents another image selected by the user for personalizing the user interface. The image data analysis may identify the people in the picture using face recognition, identify the fighter jet using object recognition, and the predominant gray color using color recognition. GPS coordinates may identify the location of the image as an historic site in Charleston, South Carolina. A theme may be created and applied to the user interface elements to display as a background image another image with the same people, and/or from the same location, to display the menu in shades of gray and/or to arrange the icons in a pattern that mimics the lines in the image. The ringtone may be selected, for example, from military music or marches.

As indicated, the electronic device 10 of the illustrated embodiments is a mobile telephone. Features of the electronic device 10, when implemented as a mobile telephone, will be described with continued reference to FIGs. 1 through 3. The electronic device 10 is shown as having a "brick" or "block" form factor housing, but it will be appreciated that other housing types may be utilized, such as a "flip-open" form factor (e.g., a "clamshell" housing), a slide-type form factor (e.g., a "slider" housing) or a pivot-type (e.g., swivel) form factor.

As indicated, the electronic device 10 may include the display 22. The display 22 displays information to a user such as operating state, time, telephone numbers, contact information, various menus, etc., that enable the user to utilize the various features of the electronic device 10. The display 22 also may be used to visually display content received by the electronic device 10 and/or retrieved from a memory 90 of the electronic device 10. The display 22 may be used to present images, video and other graphics to the user, such as photographs, mobile television content and video associated with games.

The keypad 24 and/or buttons 26 may provide for a variety of user input operations. For example, the keypad 24 may include alphanumeric keys for allowing entry of alphanumeric information such as telephone numbers, phone lists, contact information, notes, text, etc. In addition, the keypad 24 and/or buttons 26 may include special function keys such as a "call send" key for initiating or answering a call, and a "call end" key for ending or "hanging up" a call. Special function keys also may include menu navigation and select keys to facilitate navigating through a menu displayed on the display 22. For instance, a pointing device and/or navigation keys may be present to accept directional inputs from a user. Special function keys may include audiovisual content playback keys to start, stop and pause playback, skip or repeat tracks, and so forth. Other keys associated with the mobile telephone may include a volume key, an audio mute key, an on/off power key, a web browser launch key, etc. Keys or key-like functionality also may be embodied as a touch screen associated with the display 22. Also, the display 22 and keypad 24 and/or buttons 26 may be used in conjunction with one another to implement soft key functionality. As such, the display 22, the keypad 24 and/or the buttons 26 may be used to control the camera assembly 12.

The electronic device 10 may include call circuitry that enables the electronic device 10 to establish a call and/or exchange signals with a called/calling device, which typically may be another mobile telephone or landline telephone. However, the called/calling device need not be another telephone, but may be some other device such as an Internet web server, content providing server, etc. Calls may take any suitable form. For example, the call could be a conventional call that is established over a cellular circuit-switched network or a voice over Internet Protocol (VoIP) call that is established over a packet-switched capability of a cellular network or over an alternative packet-switched network, such as Wi-Fi (e.g., a network based on the IEEE 802.11 standard), WiMax (e.g., a network based on the IEEE 802.16 standard), etc. Another example includes a video enabled call that is established over a cellular or alternative network.

The electronic device 10 may be configured to transmit, receive and/or process data, such as text messages, instant messages, electronic mail messages, multimedia messages, image files, video files, audio files, ring tones, signaling audio, signaling video, data feeds (including podcasts and really simple syndication (RSS) data feeds), and so forth. It is noted that a text message is commonly referred to by some as "an SMS," which stands for simple message service. SMS is a typical standard for exchanging text messages. Similarly, a multimedia message is commonly referred to by some as "an MMS," which stands for multimedia message service. MMS is a typical standard for exchanging multimedia messages. Processing data may include storing the data in the memory 90, executing applications to allow user interaction with the data, displaying video and/or image content associated with the data, outputting audio sounds associated with the data, and so forth.

As indicated, the electronic device 10 may include the primary control circuit 30 that is configured to carry out overall control of the functions and operations of the electronic device 10. The control circuit 30 may be responsible for controlling the camera assembly 12.

The control circuit 30 may include a processing device 92, such as a central processing unit (CPU), microcontroller or microprocessor. The processing device 92 may execute code that implements the various functions of the electronic device 10. The code may be stored in a memory (not shown) within the control circuit 30 and/or in a separate memory, such as the memory 90, in order to carry out operation of the electronic device 10. In one embodiment, the processing device 92 may execute software that implements the user interface personalization function 38.

Among other data storage responsibilities, the memory 90 may be used to store photographs and/or video clips that are captured by the camera assembly 12 and may store image(s) that are received from the server 40. Alternatively, a separate memory may be responsible for these data storage tasks. The memory 90 may be, for example, one or more of a buffer, a flash memory, a hard drive, a removable media, a volatile memory, a non-volatile memory, a random access memory (RAM), or other suitable device. In a typical arrangement, the memory 90 may include a non-volatile memory (e.g., a NAND or NOR architecture flash memory) for long term data storage and a volatile memory that functions as system memory for the control circuit 30. The volatile memory may be a RAM implemented with synchronous dynamic random access memory (SDRAM), for example. The memory 90 may exchange data with the control circuit 30 over a data bus. Accompanying control lines and an address bus between the memory 90 and the control circuit 30 also may be present.

Continuing to refer to FIGs. 1 through 3, the electronic device 10 includes an antenna 94 coupled to a radio circuit 96. The radio circuit 96 includes a radio frequency transmitter and receiver for transmitting and receiving signals via the antenna 94. The radio circuit 96 may be configured to operate in a mobile communications system and may be used to send and receive data and/or audiovisual content. Receiver types for interaction with a mobile radio network and/or broadcasting network include, but are not limited to, global system for mobile communications (GSM), code division multiple access (CDMA), wideband CDMA (WCDMA), general packet radio service (GPRS), Wi-Fi, WiMax, digital video broadcasting-handheld (DVB-H), integrated services digital broadcasting (ISDB), etc., as well as advanced versions of these standards. It will be appreciated that the antenna 94 and the radio circuit 96 may represent one or more than one radio transceivers.

The electronic device 10 further includes a sound signal processing circuit 98 for processing audio signals transmitted by and received from the radio circuit 96. Coupled to the sound processing circuit 98 are a speaker 100 and a microphone 102 that enable a user to listen and speak via the electronic device 10 as is conventional. The radio circuit 96 and sound processing circuit 98 are each coupled to the control circuit 30 so as to carry out overall operation. Audio data may be passed from the control circuit 30 to the sound signal processing circuit 98 for playback to the user. The audio data may include, for example, audio data from an audio file stored by the memory 90 and retrieved by the control circuit 30, or received audio data such as in the form of streaming audio data from a mobile radio service. The sound processing circuit 98 may include any appropriate buffers, decoders, amplifiers and so forth.

The display 22 may be coupled to the control circuit 30 by a video processing circuit 104 that converts video data to a video signal used to drive the display 22. The video processing circuit 104 may include any appropriate buffers, decoders, video data processors and so forth. The video data may be generated by the control circuit 30, retrieved from a video file that is stored in the memory 90, derived from an incoming video data signal that is received by the radio circuit 96 or obtained by any other suitable method. Also, the video data may be generated by the camera assembly 12 (e.g., such as a preview video signal to provide a viewfinder function for the camera assembly 12).

The electronic device 10 may further include one or more I/O interface(s) 106. The I/O interface(s) 106 may be in the form of typical mobile telephone I/O interfaces and may include one or more electrical connectors. As is typical, the I/O interface(s) 106 may be used to couple the electronic device 10 to a battery charger to charge a battery of a power supply unit (PSU) 112 within the electronic device 10. In addition, or in the alternative, the I/O interface(s) 106 may serve to connect the electronic device 10 to a headset assembly (e.g., a personal hands free (PHF) device) that has a wired interface with the electronic device 10. Further, the I/O interface(s) 106 may serve to connect the electronic device 10 to a personal computer or other device via a data cable for the exchange of data. The electronic device 10 may receive operating power via the I/O interface(s) 106 when connected to a vehicle power adapter or an electricity outlet power adapter. The PSU 112 may supply power to operate the electronic device 10 in the absence of an external power source.

The electronic device 10 also may include a system clock 110 for clocking the various components of the electronic device 10, such as the control circuit 30 and the memory 90.

The electronic device 10 also may include a local wireless interface 108, such as an infrared transceiver and/or an RF interface (e.g., a Bluetooth interface), for establishing communication with an accessory, another mobile radio terminal, a computer or another device. For example, the local wireless interface 108 may operatively couple the electronic device 10 to a headset assembly (e.g., a PHF device) in an embodiment where the headset assembly has a corresponding wireless interface.

It will be appreciated that portions of the present invention can be implemented in hardware, software, firmware, or a combination thereof. In the described embodiment(s), a number of the steps or methods may be implemented in software or firmware that is stored in a memory and that is executed by a suitable instruction execution system. If implemented in hardware, for example, as in an alternative embodiment, implementation may be with any or a combination of the following technologies, which are all well known in the art: discrete logic circuit(s) having logic gates for implementing logic functions upon data signals, application specific integrated circuit(s) (ASIC) having appropriate combinational logic gates, programmable gate array(s) (PGA), field programmable gate array(s) (FPGA), etc.

Any process or method descriptions or blocks in flow charts may be understood as representing modules, segments, or portions of code which include one or more executable instructions for implementing specific logical functions or steps in the process, and alternate implementations are included within the scope of the preferred embodiment of the present invention in which functions may be executed out of order from that shown or discussed, including substantially concurrently or in reverse order, depending on the functionality involved, as would be understood by those reasonably skilled in the art of the present invention.

The logic and/or steps represented in the flow diagrams of the drawings, which, for example, may be considered an ordered listing of executable instructions for implementing logical functions, can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can contain, store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium. More specific examples (a nonexhaustive list) of the computer-readable medium would include the following: an electrical connection (electronic) having one or more wires, a portable computer diskette (magnetic), a random access memory (RAM) (electronic), a read-only memory (ROM) (electronic), an erasable programmable read-only memory (EPROM or Flash memory) (electronic), an optical fiber (optical), and a portable compact disc read-only memory (CDROM) (optical). Note that the computer-readable medium could even be paper or another suitable medium upon which the program is printed, as the program can be electronically captured, via for instance optical scanning of the paper or other medium, then compiled, interpreted or otherwise processed in a suitable manner if necessary, and then stored in a computer memory.

The above description and accompanying drawings depict the various features of the invention. It will be appreciated that the appropriate computer code could be prepared by a person who has ordinary skill in the art to carry out the various steps and procedures described above and illustrated in the drawings. It also will be appreciated that the various terminals, computers, servers, networks and the like described above may be virtually any type and that the computer code may be prepared to carry out the invention using such apparatus in accordance with the disclosure hereof.

Specific embodiments of an invention are disclosed herein. One of ordinary skill in the art will readily recognize that the invention may have other applications in other environments. In fact, many embodiments and implementations are possible. The following claims are in no way intended to limit the scope of the present invention to the specific embodiments described above. In addition, any recitation of "means for" is intended to evoke a means-plus-function reading of an element and a claim, whereas, any elements that do not specifically use the recitation "means for", are not intended to be read as means-plus-function elements, even if the claim otherwise includes the word "means".

Although the invention has been shown and described with respect to a certain preferred embodiment or embodiments, it is obvious that equivalent alterations and modifications will occur to others skilled in the art upon the reading and understanding of this specification and the annexed drawings. In particular regard to the various functions performed by the above described elements (components, assemblies, devices, compositions, etc.), the terms (including a reference to a "means") used to describe such elements are intended to correspond, unless otherwise indicated, to any element which performs the specified function of the described element (i.e., that is functionally equivalent), even though not structurally equivalent to the disclosed structure which performs the function in the herein illustrated exemplary embodiment or embodiments of the invention. In addition, while a particular feature of the invention may have been described above with respect to only one or more of several illustrated embodiments, such feature may be combined with one or more other features of the other embodiments, as may be desired and advantageous for any given or particular application.

Although certain embodiments have been shown and described, it is understood that equivalents and modifications falling within the scope of the appended claims will occur to others who are skilled in the art upon the reading and understanding of this specification.

## Claims

1. A method for controlling a plurality of user interface elements of a portable electronic device (10), the method comprising:
analyzing image data (52, 62) from one or more user-selected images to determine one or more image attributes (56, 66), wherein analyzing the image data comprises employing subject matter determination logic, wherein the subject matter determination logic comprises at least one of an image recognition logic, an object recognition logic and a face recognition logic configured to determine the image attributes;
processing the image attributes to generate a theme (58, 68); and
controlling (60, 70) the plurality of user interface elements based on the theme.

2. The method of claim 1 wherein the theme includes at least one of wallpaper image, icon arrangement, icon size, icon shape, text color, menu color, window border color, on-screen button color, on-screen button arrangement, animation effects and emitted light color.

3. The method of claim 1 wherein the theme includes at least one of ringtone, message alert sound, and button click sound.

4. The method of any one of claims 1-3 wherein the analyzing, processing and controlling are carried out in response to user selection of a dedicated theme key or menu option.

5. The method of any one of claims 1-4 wherein the image attributes include at least one of color, amount or direction of lines, subject matter, identity of person, image characteristics and location.

6. The method of claim 5 wherein each attribute has a score or value that is assembled into an image attribute map.

7. The method of any one of claims 1-6 further comprising transferring the theme to another electronic device for use by the other electronic device to control user interface elements of the other electronic device.

8. The method of claim 1 wherein the plurality of user interface elements includes icons, the analyzing includes determining the amount or direction of lines in the image data, and the theme includes icon arrangement in accordance with the lines.

9. The method of any one of claims 1-8 wherein the electronic device (10) includes a camera assembly (12).

10. The method of claim 9 wherein the user selected image is received from the camera assembly (12).

11. The method of any one of claims 1-8 wherein the user selected image is received from an image database.

12. The method of any one of claims 1-11 wherein the user selected image is a video.

13. A portable electronic device (10), comprising:
a display (22) for displaying a graphical user interface;
a controller (28) configured to:
analyze image data (52, 62) from one or more user-selected images to determine one or more prominent image attributes (56, 66), the images being analyzed using subject matter determination logic, wherein the subject matter determination logic comprises at least one of an image recognition logic, an object recognition logic and a face recognition logic configured to determine the image attributes;
establish a theme (58, 68) having user interface effects, the user interface effects established as a function of a map of the prominent image attributes; and
control (60, 70) the display to display the graphical user interface in accordance with the user interface effects.

14. The electronic device of claim 13 further comprising a camera assembly (12).

## Patentansprüche

1. Verfahren zur Steuerung einer Vielzahl von Benutzerschnittstellenelementen einer tragbaren elektronischen Vorrichtung (10), wobei das Verfahren Folgendes umfasst:
Analysieren von Bilddaten (52, 62) von einem oder mehreren benutzerausgewählten Bildern zum Bestimmen eines oder mehrerer Bildattribute (56, 66), wobei das Analysieren der Bilddaten das Anwenden von Gegenstandsbestimmungslogik umfasst, wobei die Gegenstandsbestimmungslogik zumindest eine von einer Bilderkennungslogik, einer Objekterkennungslogik und einer Gesichtserkennungslogik umfasst, die konfiguriert ist, um die Bildattribute zu bestimmen;
Verarbeiten der Bildattribute, um ein Thema (58, 68) zu generieren; und
Steuern (60, 70) der Vielzahl von Benutzerschnittstellenelementen basierend auf dem Thema.

2. Verfahren nach Anspruch 1, wobei das Thema zumindest eines von Wallpaper-Bild, Symbolanordnung, Symbolgröße, Symbolform, Textfarbe, Menüfarbe, Fensterrandfarbe, Schaltflächenfarbe auf Bildschirm, Schaltflächenanordnung auf Bildschirm, Animationseffekten und emittierter Lichtfarbe beinhaltet.

3. Verfahren nach Anspruch 1, wobei das Thema zumindest eines von Klingelton, Nachrichtensignalton und Schaltflächenklickton beinhaltet.

4. Verfahren nach einem der Ansprüche 1-3, wobei das Analysieren, Verarbeiten und Steuern als Reaktion auf Benutzerauswahl eines/einer dedizierten Themenschlüssels oder Menüoption durchgeführt werden.

5. Verfahren nach einem der Ansprüche 1-4, wobei die Bildattribute zumindest eines von Farbe, Menge oder Richtung von Linien, Gegenstand, Personenidentität, Bildeigenschaften und Standort beinhalten.

6. Verfahren nach Anspruch 5, wobei jedes Attribut einen Score oder Wert aufweist, der zu einer Bildattributkarte zusammengesetzt wird.

7. Verfahren nach einem der Ansprüche 1-6, ferner umfassend das Übertragen des Themas auf eine andere elektronische Vorrichtung zur Verwendung durch die andere elektronische Vorrichtung, um Schnittstellenelemente der anderen elektronischen Vorrichtung zu steuern.

8. Verfahren nach Anspruch 1, wobei die Vielzahl von Benutzerschnittstellenelementen Symbole beinhaltet, das Analysieren das Bestimmen der Menge oder Richtung von Linien in den Bilddaten beinhaltet und das Thema Symbolanordnung gemäß den Linien beinhaltet.

9. Verfahren nach einem der Ansprüche 1-8, wobei die elektronische Vorrichtung (10) eine Kamerabaugruppe (12) beinhaltet.

10. Verfahren nach Anspruch 9, wobei das benutzerausgewählte Bild von der Kamerabaugruppe (12) empfangen wird.

11. Verfahren nach einem der Ansprüche 1-8, wobei das benutzerausgewählte Bild von einer Bilddatenbank empfangen wird.

12. Verfahren nach einem der Ansprüche 1-11, wobei das benutzerausgewählte Bild ein Video ist.

13. Tragbare elektronische Vorrichtung (10), umfassend:
eine Anzeige (22) zum Anzeigen einer graphischen Benutzerschnittstelle;
eine Steuerung (28), die für Folgendes konfiguriert ist:
Analysieren von Bilddaten (52, 62) von einem oder mehreren benutzerausgewählten Bildern zum Bestimmen eines oder mehrerer markanter Bildattribute (56, 66), wobei die Bilder unter Verwendung von Gegenstandsbestimmungslogik analysiert werden, wobei die Gegenstandsbestimmungslogik zumindest eine von einer Bilderkennungslogik, einer Objekterkennungslogik und einer Gesichtserkennungslogik umfasst, die konfiguriert ist, um die Bildattribute zu bestimmen;
Festlegen eines Themas (58, 68), das Benutzerschnittstelleneffekte aufweist, wobei die Benutzerschnittstelleneffekte in Abhängigkeit einer Karte der markanten Bildattribute festgelegt werden; und
Steuern (60, 70) der Anzeige, um die graphische Benutzerschnittstellenfläche gemäß den Benutzerschnittstelleneffekten anzuzeigen.

14. Elektronische Vorrichtung nach Anspruch 13, ferner umfassend eine Kamerabaugruppe (12).

## Revendications

1. Procédé de commande d'une pluralité d'éléments d'interface utilisateur d'un dispositif électronique portable (10), le procédé comprenant :
l'analyse de données d'image (52, 62) à partir d'une ou plusieurs images sélectionnées par l'utilisateur pour déterminer un ou plusieurs attributs d'image (56, 66), dans lequel l'analyse des données d'image comprend l'utilisation d'une logique de détermination du sujet, dans lequel la logique de détermination du sujet comprend au moins l'une d'une logique de reconnaissance d'image, une logique de reconnaissance d'objet et une logique de reconnaissance de visage configurée pour déterminer les attributs d'image ;
le traitement des attributs d'image pour générer un thème (58, 68) ; et
la commande (60, 70) de la pluralité d'éléments d'interface utilisateur sur la base du thème.

2. Procédé selon la revendication 1, dans lequel le thème comprend au moins l'un d'une image de fond d'écran, une disposition d'icônes, une taille d'icônes, une forme d'icônes, une couleur de textes, une couleur de menus, une couleur de bordures de fenêtres, une couleur de boutons à l'écran, une disposition de boutons à l'écran, des effets d'animation et une couleur de lumière émise.

3. Procédé selon la revendication 1, dans lequel le thème comprend au moins l'un d'une tonalité de sonnerie, un son d'alerte de message et un son de clic sur un bouton.

4. Procédé selon l'une quelconque des revendications 1 à 3, dans lequel l'analyse, le traitement et la commande sont exécutés en réponse à la sélection par l'utilisateur d'une touche de thème ou d'une option de menu dédiée.

5. Procédé selon l'une quelconque des revendications 1 à 4, dans lequel les attributs d'image comprennent au moins l'un d'une couleur, une quantité ou une orientation de lignes, un sujet, une identité de personne, des caractéristiques d'image et un lieu.

6. Procédé selon la revendication 5, dans lequel chaque attribut a un score ou une valeur qui est assemblé dans une carte d'attributs d'image.

7. Procédé selon l'une quelconque des revendications 1 à 6, comprenant en outre le transfert du thème vers un autre dispositif électronique pour être utilisé par l'autre dispositif électronique afin de commander des éléments d'interface utilisateur de l'autre dispositif électronique.

8. Procédé selon la revendication 1, dans lequel la pluralité d'éléments d'interface utilisateur comprend des icônes, l'analyse comprend la détermination de la quantité ou de l'orientation de lignes dans les données d'image, et le thème comprend une disposition d'icônes en fonction des lignes.

9. Procédé selon l'une quelconque des revendications 1 à 8, dans lequel le dispositif électronique (10) comprend un ensemble caméra (12).

10. Procédé selon la revendication 9, dans lequel l'image sélectionnée par l'utilisateur est reçue à partir de l'ensemble caméra (12).

11. Procédé selon l'une quelconque des revendications 1 à 8, dans lequel l'image sélectionnée par l'utilisateur est reçue à partir d'une base de données d'images.

12. Procédé selon l'une quelconque des revendications 1 à 11, dans lequel l'image sélectionnée par l'utilisateur est une vidéo.

13. Dispositif électronique portable (10), comprenant :
un afficheur (22) pour afficher une interface utilisateur graphique ;
un contrôleur (28) configuré pour :
analyser des données d'image (52, 62) à partir d'une ou plusieurs images sélectionnées par l'utilisateur pour déterminer un ou plusieurs attributs d'image prépondérants (56, 66), les images étant analysées au moyen d'une logique de détermination du sujet, dans lequel la logique de détermination du sujet comprend au moins l'une d'une logique de reconnaissance d'image, une logique de reconnaissance d'objet et une logique de reconnaissance de visage configurée pour déterminer les attributs d'image ;
établir un thème (58, 68) ayant des effets d'interface utilisateur, les effets d'interface utilisateur étant établis en fonction d'une carte des attributs d'image prépondérants ; et
commander (60, 70) l'afficheur pour afficher l'interface utilisateur graphique en fonction des effets d'interface utilisateur.

14. Dispositif électronique selon la revendication 13, comprenant en outre un ensemble caméra (12).
